# EUROPÄISCHE PATENTANMELDUNG

(11) **EP 0 953 475 A1**
(43) Veröffentlichungstag der Anmeldung: **03.11.1999**
(21) Anmeldenummer: 98122215.1
(22) Anmeldetag: 23.11.1998
(51) Int. Cl.: B60N 2/48

(54) **Anordnung zur stufenweisen Verstellung einer Kopfstütze für Kraftfahrzeuge**

(30) Priorität: 30.04.1998 DE 19819504
(71) Anmelder: R. SCHMIDT GMBH, 57368 Lennestadt (DE)
(72) Erfinder: Lohmann, Horst, 59846 Sundern (DE)
(74) Vertreter: Patentanwälte Dipl.-Ing. Conrad Köchling Dipl.-Ing. Conrad-Joachim Köchling

(57) **Zusammenfassung**

Um eine Anordnung zur stufenweisen Verstellung einer Kopfstütze an einer Sitzlehne eines Sitzes für Kraftfahrzeuge, bestehend aus mindestens einer an der Sitzlehne befestigten Raststange und einer auf der Raststange angeordneten Kopfstütze, zu schaffen, die aus wenigen unkomplizierten Einzelteilen besteht, die eine hohe Funktionssicherheit aufweist und eine lange Betriebsdauer besitzt, wird vorgeschlagen, daß an der Kopfstütze ein von der Raststange (1) längs durchgriffener Stangenträger (2) gehaltert ist, und in einer Ausnehmung des Stangenträgers (2) ein Gleitschuh (3) mit Rastnase gehaltert ist, der mittels Federkraft gegen die Raststange (1) angedrückt ist.

## Beschreibung

Die Erfindung betrifft eine Anordnung zur stufenweisen Verstellung einer Kopfstütze an einer Sitzlehne eines Sitzes für Kraftfahrzeuge, bestehend aus mindestens einer an der Sitzlehne befestigten Raststange und einer auf der Raststange angeordneten Kopfstütze.

Im Stand der Technik sind unterschiedliche Anordnungen dieser Art bekannt.

Der Erfindung liegt die Aufgabe zugrunde, eine universelle Anordnung gattungsgemäßer Art zu schaffen, die aus wenigen unkomplizierten Einzelteilen besteht, die eine hohe Funktionssicherheit aufweist und eine lange Betriebsdauer besitzt.

Zur Lösung dieser Aufgabe wird vorgeschlagen, daß an der Kopfstütze ein von der Raststange längs durchgriffener Stangenträger gehaltert ist, und in einer Ausnehmung des Stangenträgers ein Gleitschuh mit Rastnase gehaltert ist, der mittels Federkraft gegen die Raststange angedrückt ist.

Erfindungsgemäß ist der Stangenträger durch ein längliches Kunststoffspritzteil gebildet, welches im Querschnitt rechteckig ausgebildet und einen im wesentlichen kreisrunden Durchgangskanal für den Durchgriff der Raststange aufweist. An einem Ende kann der Stangenträger einen Anschlag aufweisen, bis zu welchem er in die entsprechende Ausnehmung einer Kopfstütze steckbar mit dieser verbindbar, beispielsweise rastverbindbar ist. Eine der Seitenwandungen des Stangenträgers weist eine Ausnehmung auf, in die ein etwa quaderförmiger Gleitschuh eingesetzt ist. Der Gleitschuh ist an seiner der Raststange der Sitzlehne zugewandten Seite der Kontur der Raststange angepaßt geformt und weist an dieser Seite mindestens eine Rastnase auf, die in eine entsprechende Raste der Raststange einsetzbar ist. Um den Gleitschuh an dem Stangenträger zu haltern und gleichzeitig eine Federvorspannung in Richtung auf die Raststange zu erreichen, ist eine entsprechende Feder vorgesehen, die dem Gleitschuh an dem Stangenträger beziehungs-weise in dessen Ausnehmung unverlierbar haltert und mittels derer eine entsprechende Federvorspannung aufgebracht ist, so daß der Gleitschuh mit der Rastnase gegen die Raststange angedrückt gehalten wird.

Bevorzugt ist dabei vorgesehen, daß der Gleitschuh mittels einer am Stangenträger gehalterten U-förmigen Feder gegen die Raststange angedrückt ist, die mit ihren Schenkeln zwischen außenseitigen Widerlagern an dem Stangenträger fixiert ist, mit ihrer Basis in eine Kerbe des Stangenträgers und des Gleitschuhs unter Federvorspannung eingreift und so den Gleitschuh gegen die Raststange angedrückt hält.

Desweiteren ist bevorzugt vorgesehen, daß die Kerben der Raststange flachwinklig ausgebildet sind, so daß der Stangenträger samt Gleitschuh durch Druckbeaufschlagung des Stangenträgers beziehungsweise der damit ausgestatteten Kopfstütze in Längsrichtung der Raststange verschiebbar ist.

Bei einer derartigen Anordnung kann eine Verstellung der Kopfstütze in der Weise erfolgen, daß Druckkräfte oder Zugkräfte auf die mit dem Stangenträger samt Gleitschuh und Feder ausgestattete Kopfstütze in Längsrichtung der Raststange ausgeübt werden. Hierdurch kann die Raste des Gleitschuhs aus der entsprechenden Rastkerbe der Raststange herausgedrängt werden und die Kopfstütze entsprechend entlang der Raststange verschoben werden, bis die gewünschte Position erreicht ist und die Rastnase des Gleitschuhs in eine Kerbe der Raststange einfällt.

Unter Umständen ist auch bevorzugt vorgesehen, daß am Stangenträger eine frei zugängliche Handhabe angeordnet ist, mittels derer die Feder aus der auf den Gleitschuh einwirkenden Arbeitslage in eine den Gleitschuh freigebende Verstellage verstellbar ist.

Insbesondere dann, wenn die Kerben der Raststange relativ spitzwinklig ausgebildet sind, ist ein Verschieben der Kopfstütze auf der Raststange ohne weiteres nicht mehr möglich. In diesem Falle ist durch die zusätzliche Handhabe eine Möglichkeit gebildet, den Gleitschuh von der Federkraft zu entlasten, so daß dann eine Verschiebung der Kopfstütze entlang der Raststange erfolgen kann. Ist die gewünschte Position erreicht, kann die Handhabe losgelassen werden und die Rastnase des Gleitschuhs kann in eine entsprechende Rastkerbe der Raststange einfallen.

Eine bevorzugte Ausbildung hierzu wird darin gesehen, daß die Handhabe ein Stellhebel ist, der an dem Stangenträger um eine parallel zur Basis der Feder, quer zur Längserstreckung der Raststange gerichtete Achse schwenkbar ist, wobei dessen eines Ende die Handhabe bildet und dessen anderes Ende auf die Schenkel der Feder einwirkt.

Ausführungsbeispiele der Erfindung sind in der Zeichnung dargestellt und im folgenden näher beschrieben. Es zeigt:
- Figur 1: eine erste Ausführungsform in Ansicht;
- Figur 2: eine Einzelheit ebenfalls in Ansicht;
- Figur 3: eine Variante in der Ansicht gemäß Figur 1.

In der Zeichnung ist eine Anordnung zur stufenweisen Verstellung einer Kopfstütze an einer Sitzlehne eines Sitzes für Kraftfahrzeuge gezeigt. Die Anordnung besteht üblicherweise aus zwei parallel zueinander gerichteten, an der Sitzlehne befestigten Raststangen 1, die in entsprechende Kanäle an der Unterkante der Kopfstütze des entsprechenden Sitzes einschiebbar sind.

Erfindungsgemäß ist an der Kopfstütze ein von der Raststange 1 längs durchgriffener Stangenträger 2 gehaltert. Der Stangenträger 2 weist einen Anschlag 6 auf, bis zu welchem der Stangenträger in den entsprechenden Einschubkanal der Kopfstütze oder dergleichen eingesteckt werden kann. Die Verbindung kann durch Klebmittel oder auch durch Rastmittel gesichert sein. Der Stangenträger ist ein Kunststoffformteil, welches im wesentlichen rechteckigen Querschnitt aufweist. Der Stangenträger weist einen der Form der Raststange 1 angepaßten Längsdurchgangskanal auf. Seitlich weist der Stangenträger 2 eine fensterartige Ausnehmung auf, in die ein Gleitschuh 3 eingesetzt ist, der an seiner der Raststange 1 zugewandten Seite eine Rastnase aufweist. Der Gleitschuh 3 ist mittels einer Feder 4 einerseits am Stangenträger 2 gehaltert und andererseits unter Federvorspannung mit seiner Raste gegen die Raststange 1 angedrückt, so daß die Raste je nach Stellung in eine der Kerben der Raststange 1 einfällt.

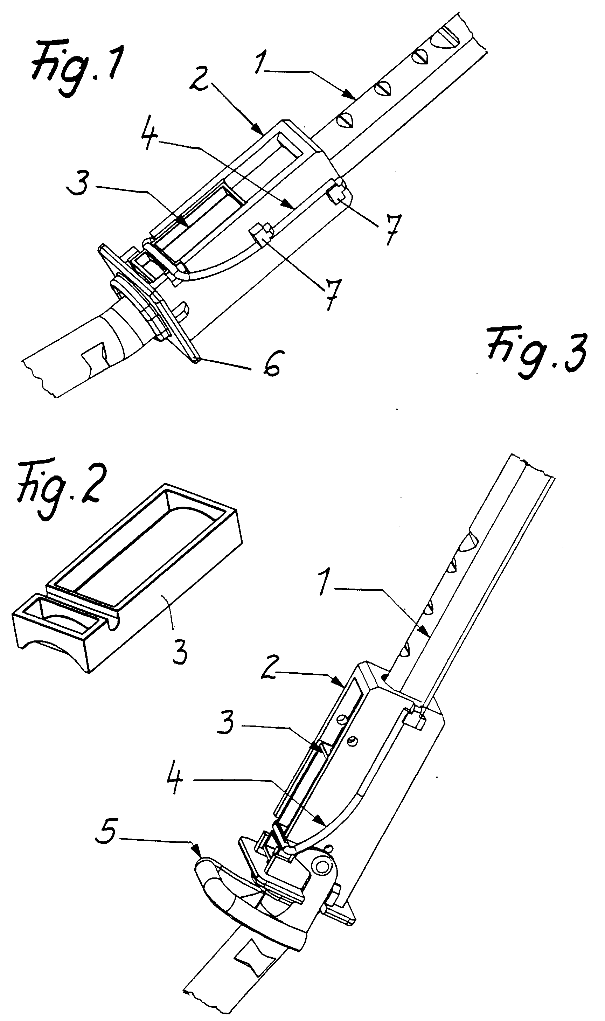

Der Gleitschuh 3 ist mittels einer am Stangenträger 2 gehalterten U-förmigen Feder 4 gegen die Raststange 1 angedrückt, wobei die Feder 4 mit ihren Schenkeln zwischen außenseitigen Widerlagern 7 an dem Stangenträger 2 fixiert ist, mit ihrer Basis in eine Kerbe des Stangenträgers 2 und des Gleitschuhs 3 unter Federvorspannung eingreift und so den Gleitschuh 3 gegen die Raststange 1 angedrückt hält. Bei der Ausführungsform nach Figur 1 sind die Kerben der Raststange 1 relativ stumpfwinklig ausgebildet, so daß der Stangenträger 2 samt Gleitschuh 3 durch Druckbeaufschlagung der Kopfstütze in Längsrichtung der Raststange 1 verschiebbar ist.

Um insbesondere dann, wenn die Kerben der Raststange 1 spitzwinklig ausgebildet sind, eine leichtgängige Betätigung und Verstellung zu ermöglichen, ist am Stangenträger 2 gemäß Ausführungsform nach Figur 3 eine Handhabe 5 angeordnet, mittels derer die Feder 4 aus der auf den Gleitschuh 3 einwirkenden Arbeitslage in eine den Gleitschuh 3 freigebende Verstellage verstellbar ist. Dazu ist die Handhabe 5 als Stellhebel ausgebildet, der an dem Stangenträger 2 um eine parallel zur Basis der Feder 4 und quer zur Längserstreckung der Raststange 1 gerichtete Achse schwenkbar ist. Dessen eines Ende bildet die Handhabe 5 und dessen andere Ende wirkt auf die Schenkel der Feder 4 ein, um diese gegebenenfalls aus der Anzugslage in die Freigabelage zu bewegen. In der Freigabelage ist dann eine leicht gängige Verschiebung des Stangenträgers 2 relativ zur Raststange 1 möglich. Wird die Handhabe 5 losgelassen, so kann die Raste des Gleitschuhs 3 wieder in eine entsprechende Kerbe der Raststange 1 einrasten.

Die Erfindung ist nicht auf die Ausführungsbeispiele beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Anordnung zur stufenweisen Verstellung einer Kopfstütze an einer Sitzlehne eines Sitzes für Kraftfahrzeuge, bestehend aus mindestens einer an der Sitzlehne befestigten Raststange und einer auf der Raststange angeordneten Kopfstütze, **dadurch gekennzeichnet**, daß an der Kopfstütze ein von der Raststange (1) längs durchgriffener Stangenträger (2) gehaltert ist, und in einer Ausnehmung des Stangenträgers (2) ein Gleitschuh (3) mit Rastnase gehaltert ist, der mittels Federkraft gegen die Raststange (1) angedrückt ist.

2. Anordnung nach Anspruch 1, **dadurch gekennzeichnet**, daß der Gleitschuh (3) mittels einer am Stangenträger (2) gehalterten U-förmigen Feder (4) gegen die Raststange (1) angedrückt ist, die mit ihren Schenkeln zwischen außenseitigen Widerlagern (7) an dem Stangenträger (2) fixiert ist, mit ihrer Basis in eine Kerbe des Stangenträgers (2) und des Gleitschuhs (3) unter Federvorspannung eingreift und so den Gleitschuh (3) gegen die Raststange (1) angedrückt hält.

3. Anordnung nach Anspruch 1 oder 2, **dadurch gekennzeichnet**, daß die Kerben der Raststange (1) flachwinklig ausgebildet sind, so daß der Stangenträger (2) samt Gleitschuh (3) durch Druckbeaufschlagung des Stangenträgers (2) beziehungsweise der damit ausgestatteten Kopfstütze in Längsrichtung der Raststange (1) verschiebbar ist.

4. Anordnung nach einem der Ansprüche 1 bis 3, **dadurch gekennzeichnet**, daß am Stangenträger (2) eine frei zugängliche Handhabe (5) angeordnet ist, mittels derer die Feder (4) aus der auf den Gleitschuh (3) einwirkenden Arbeitslage in eine den Gleitschuh (3) freigebende Verstellage verstellbar ist.

5. Anordnung nach Anspruch 4, **dadurch gekennzeichnet**, **daß** die Handhabe (5) ein Stellhobel ist, der an dem Stangenträger (2) um eine parallel zur Basis der Feder (4), quer zur Längserstreckung der Raststange (1) gerichtete Achse schwenkbar ist, wobei dessen eines Ende die Handhabe (5) bildet und dessen anderes Ende auf die Schenkel der Feder (4) einwirkt.
